Europäisches Patentamt

European Patent Office

Office européen des brevets

(11) Veröffentlichungsnummer: **0 455 026 A2**

# EUROPÄISCHE PATENTANMELDUNG

(21) Anmeldenummer: 91105915.2

(22) Anmeldetag: 13.04.91

(51) Int. Cl.⁵: **B29C 67/22**, B32B 33/00, C08G 18/00

(30) Priorität: 28.04.90 DE 4013712

(43) Veröffentlichungstag der Anmeldung: 06.11.91 Patentblatt 91/45

(84) Benannte Vertragsstaaten: BE CH DE ES FR GB IT LI NL SE

(71) Anmelder: **BAYER AG**

**W-5090 Leverkusen 1 Bayerwerk(DE)**

(72) Erfinder: **Eisen, Norbert, Dr.**
**Manderscheider Strasse 6**
**W-5000 Koeln 41(DE)**
Erfinder: **Zöllner, Robert, Dr.**
**Feuerbachstrasse 11**
**W-5090 Leverkusen(DE)**
Erfinder: **Henning, Wolfgang, Dr.**
**Zur Linde 27**
**W-5067 Kuerten(DE)**
Erfinder: **Dederichs, Reinhold**
**Kurt-Schumacher Ring 86**
**W-5090 Leverkusen(DE)**

(54) Verfahren zur Herstellung von hinterschäumten Innenteilen für Kühlmöbel.

(57) Ein Verfahren zur Herstellung von hinterschäumten, tiefgezogenen Kunststoff-Innenteilen für Kühlmöbel durch Hintersäumung der Innenteile mit einem zu einem Polyurethanhartschaum ausreagierenden, ein organisches Treibmittel enthaltenden Reaktionsgemisch, wobei man einerseits ein Reaktionsgemisch verwendet, welches als Treibmittel einen teilhalogenierten Kohlenwasserstoff mit mindestens einer Kohlenstoff-Wasserstoff-Bindung enthält und andererseits die zu hinterschäumenden Innenteile vor der Hinterschäumung schaumstoffseitig mit einer Lackschicht auf Basis eines lösungsmittelhaltigen, chemisch vernetzenden Ein- oder Zweikomponentenlacks oder auf Basis einer wäßrigen Polyurethandispersion versieht.

EP 0 455 026 A2

Die Erfindung betrifft ein neues Verfahren zur Herstellung von hinterschäumten, tiefgezogenen Kunststoff-Innenteilen für Kühlmöbel unter Verwendung eines zu einem Polyurethanhartschaumstoff ausreagierenden Reaktionsgemischs, welches als Treibmittel bestimmte teilhalogenierte Kohlenwasserstoffe enthält, wobei die zu hinterschäumenden Kunststoff-Innenteile schaumstoffseitig mit einer speziellen Lackschicht versehen sind.

Polyurethanhartschaumstoff wird seit langen Jahren wegen seiner hervorragenden Wärmedämmeigenschaften zur Herstellung von Kühlmöbeln und Kühlgeräten verwendet. Bei der Herstellung von Kühlschränken dient der Hartschaumstoff gleichzeitig als Konstruktionsmaterial. Die Wärmeleitfähigkeit des Polyurethanhartschaumstoffs, der weitgehend geschlossene Zellen aufweist, ist in starkem Maße abhängig von der Art des verwendeten Treibmittels bzw. Zellgases. Als besonders geeignet haben sich hierzu die perhalogenierten Fluorchlorkohlenwasserstoffe (FCKW), insbesondere Trichlorfluormethan (R11) erwiesen, welches eine besonders geringe Wärmeleitfähigkeit aufweist. Im übrigen sind diese Stoffe chemisch inert, infolgedessen ungiftig und nicht brennbar. Die perhalogenierten Fluorchlorkohlenwasserstoffe haben indessen den Nachteil, daß sie infolge ihrer hohen Stabilität in die Stratosphäre gelangen, wo sie aufgrund ihres Gehaltes an Chlor zum Abbau des dort vorhandenen Ozons beitragen (z.B. Molina, Rowland Mature 249 (1974) 810; Erster Zwischenbericht der Bundestags-Enquete-Kommission "Vorsorge zum Schutz der Erdatmosphäre" vom 02.11.1988, Deutscher Bundestag, Referat Offentlichkeitsarbeit, Bonn).

Es war daher die der Erfindung zugrundeliegende Aufgabe, ein neues Verfahren zur Herstellung von hinterschäumten Kühlschrankinnenbehältern zur Verfügung zu stellen, bei welchem auf die Mitverwendung von perhalogenierten Fluorchlorkohlenwasserstoffen verzichtet werden kann, ohne das größere Einbußen bezüglich der Wärmedämmung in Kauf genommen werden müssen.

Ein Teilaspekt der erfindungsgemäßen Lösung dieser Aufgabe bestand darin, solche zu Polyurethanschaumstoffen ausreagierende Reaktionsgemische zu verwenden, die als Treibmittel teilhalogenierte Kohlenwasserstoffe enthalten, die noch mindestens eine Kohlenstoff-Wasserstoff-Bindung aufweisen. Die Verwendung derartiger Treibmittel, die ein weit geringeres Ozon-Schädigungspotential aufweisen als die eingangs erwähnten perhalogenierten Verbindungen scheiterte jedoch zunächst an dem Umstand, daß die bislang zur Herstellung von Kühlschrankinnenbehältern verwendeten, tiefgezogenen Kunststoffolien oder -platten auf Basis von Acrylnitril-Butadien-Styrol-Copolymerisaten (ABS) oder von Styrol-Butadien-Copolymerisaten (SB) gegenüber diesen teilhalogenierten Kohlenwasserstoffen keine ausreichend hohe Resistenz aufweisen. Es handelt sich nämlich bei diesen Kohlenwasserstoffen um äußerst aggressive Lösungsmittel, die bei einem Kühlschrank unter Betriebsbedingungen zumindest teilweise nahe der Innenbehälterwand kondensieren. Je nach Lage und Häufigkeit von Lunkern kann somit kondensiertes Treibmittel direkt auf das Innenbehältermaterial einwirken und dieses u.U. erheblich beschädigen. Wird beispielsweise als Innenbehältermaterial SB und als Treibmittel 1,1-Dichlor-2,2,2-trifluorethan verwendet, äußern sich die Lösungseffekte in Form von Blasen und Löchern. Im Falle der Verwendung von ABS als Innenbehältermaterial treten außerdem Spannungsrisse auf.

Gemäß einem weiteren Teilaspekt der erfindungsgemäßen Lösung der obengenannten Aufgabe werden die genannten Schwierigkeiten dadurch überwunden, daß man die durch Tiefziehen hergestellten Kühlschrankinnenbehälter vor der Hinterschäumung schaumstoffseitig mit einer gegenüber den genannten Treibmittel resistenten Lackschicht versieht.

Gegenstand der Erfindung ist demzufolge ein Verfahren zur Herstellung von hinterschäumten, tiefgezogenen Kunststoff-Innenteilen für Kühlmöbel durch Hinterschäumung der Innenteile mit einem zu einem Polyurethanhartschaumstoff ausreagierenden, ein organisches Treibmittel enthaltenden Reaktionsgemisch, dadurch gekennzeichnet, daß man

(i) ein Reaktionsgemisch verwendet, welches als Treibmittel, gegebenenfalls neben weiteren Treibmitteln, einen teilhalogenierten Kohlenwasserstoff mit mindestens einer Kohlenstoff-Wasserstoff-Bindung des Siedebereichs von -50° C bis +50° C enthält und

(ii) die zu hinterschäumenden Innenteile vor der Hinterschäumung schaumstoffseitig mit einer Lackschicht auf Basis eines lösungsmittelhaltigen, chemisch vernetzenden Ein- oder Zweikomponenten-Lacks oder auf Basis einer wäßrigen Polyurethandispersion versieht.

Bei den beim erfindungsgemäßen Verfahren zu hinterschäumenden Innenteilen für Kühlmöbel handelt es sich um Kunststoff-Innenteile von Gehäusen, Türen oder Deckel von Kühl- und Gefriermöbeln, die im allgemeinen durch Tiefziehen aus entsprechenden thermoplastischen Kunststoffolien oder -platten hergestellt werden, wobei vorzugsweise als Kunststoffmaterial ABS bzw. SB zum Einsatz gelangt. Bei der Herstellung der Kühlmöbel werden diese Innenteile mit einem zu Polyurethanhartschaumstoff ausreagierenden Reaktionsgemisch hinterschäumt. Die Erfindung ist nun darin zu sehen, daß einerseits spezielle Treibmittel enthaltende Reaktionsgemische zur Herstellung der Hartschaumstoffe verwendet werden und andererseits die Innenteile schaumstoffseitig mit einer Lackschicht versehen werden, so daß sie von den Treibmitteln nicht angelöst werden können.

Zur Herstellung der Polyurethanhartschaumstoffe werden erfindungsgemäß die üblichen chemischen Systeme eingesetzt, wobei lediglich als Treibmittel anstelle der bislang eingesetzten perhalogenierten Kohlenwasserstoffe wie insbesondere Trichlorfluormethan teilhalogenierte Kohlenwasserstoffe verwendet werden, die bei einem Druck von 1013 mbar innerhalb des Temperaturbereichs von -50°C bis +50°C, vorzugsweise von +10°C bis +35°C sieden und mindestens eine Kohlenstoff-Wasserstoff-Bindung aufweisen. In Betracht kommen beispielsweise 1,1-Dichlor-2,2,2-trifluorethan (H-FCKW 123), 1,1-Dichlor-1-fluorethan (H-FCKW 141b) oder Chlordifluormethan (H-FCKW 22). Bevorzugt sind H-FCKW 123 und 141b, besonders bevorzugt ist H-FCKW 123.

Bezüglich der übrigen Bestandteile des zum Hartschaumstoff ausreagierenden Reaktionsgemischs kann auf die einschlägige Literatur verwiesen werden (z.B. "Kunststoff-Handbuch", Band 7 "Polyurethane", Carl Hanser Verlag München, Wien (1983), Seiten 246 ff.).

Vorzugsweise bestehen die beim erfindungsgemäßen Verfahren eingesetzten, zu Polyurethanhartschaumstoffen ausreagierenden Reaktionsgemische aus a) Polyisocyanaten, b) organischen Polyhydroxylverbindungen, c) Treibmitteln und d) Hilfs- und Zusatzstoffen, wobei als Polyisocyanat a) insbesondere Polyisocyanatgemische der Diphenylmethanreihe (MDI) einer Viskosität von 50 bis 2000, vorzugsweise 100 bis 300 mPa.s (25°C) und einer NCO-Funktionalität von 2,5 bis 3,2,
als Polyhydroxylverbindungen b) Polyetherpolyole einer mittleren Hydroxylfunktionalität von 3 bis 6, vorzugsweise 4 bis 5,5 und einer Hydroxylzahl von 200 bis 600, vorzugsweise 300 bis 500,
als Treibmittel c) solche der obengenannten erfindungsgemäßen Art und
als Hilfs- und Zusatzmittel d) beispielsweise die üblichen Aktivatoren, Schaumstabilisatoren, Flammschutzmittel, u.dgl.
zum Einsatz gelangen, wobei im allgemeinen Isocyanatkennzahlen von 100 bis 120 eingehalten werden. Die chemische Zusammensetzung des zum Polyurethanhartschaumstoff ausreagierenden Reaktionsgemischs ist, von erfindungswesentlichen Treibmitteln c) abgesehen, nicht kritisch.

Die tiefgezogenen Kunststoff-Innenteile werden vor der Hinterschäumung schaumstoffseitig mit einer Lackschicht versehen. Diese Lackschicht kann sowohl auf einer wäßrigen Polyurethandispersion als auch auf einem chemisch vernetzenden Zweikomponenten-Bindemittel, welches in in organischen Lösungsmitteln gelöster Form zum Einsatz gelangt, basieren. Vorzugsweise werden solche Lacke verwendet, die zu Lackfilmen mit einer Dehnfähigkeit bei Raumtemperatur von mindestens 15 % führen.

Wäßrige Polyurethandispersionen, die als solche oder in Abmischung mit aus der Lacktechnologie an sich bekannten Hilfs- und Zusatzmitteln zur Herstellung der Lackschicht verwendet werden können, sind beispielsweise in den US-Patenten 4 190 566 bzw. 4 237 264 beschrieben.

Geeignete Beschichtungsmittel auf Basis von chemisch vernetzenden Zweikomponenten-Bindemitteln sind insbesondere die an sich bekannten Zweikomponenten-Polyurethanlacke und Amin-vernetzbare Polyepoxidharzlacke.

Die im Rahmen der Erfindung besonders bevorzugten Zweikomponenten-Polyurethanlacke basieren im wesentlichen auf Zweikomponenten-Bindemitteln aus a) einer Polyisocyanat-Komponente und b) einer Polyolkomponente.

Als Polyisocyanatkomponente a) kommen im Prinzip alle üblichen Polyisocyanate in Betracht. Vorzugsweise besteht die Polyisocyanatkomponente jedoch aus modifizierten Polyisocyanaten auf Basis von einfachen Diisocyanaten wie 2,4- bzw. 2,6-Diisocyanatotoluol (TDI), 4,4'-Diisocyanatodiphenylmethan (MDI), 1,6-Diisocyanatohexan (HDI) oder Isophorondiisocyanat (IPDI). In Betracht kommen insbesondere Urethangruppen aufweisende Polyisocyanate auf Basis von TDI, beispielsweise das Umsetzungsprodukt von 2,4-Diisocyanatotoluol mit Trimethylolpropan, Isocyanuratgruppen aufweisende Polyisocyanate auf Basis von IPDI und/oder HDI und Biuretgruppen aufweisende Polyisocyanate auf Basis von HDI. Der NCO-Gehalt der Polyisocyanatkomponente a) liegt vorzugsweise bei 10 bis 25 Gew.-%.

Als Polyhydroxylkomponente b) kommen insbesondere die an sich bekannten Polyesterpolyole, Polyetherpolyole und/oder Polyacrylatpolyole zum Einsatz. Die Polyhydroxylverbindungen weisen im allgemeinen über 2 Gew.-%, vorzugsweise 3 bis 5 Gew.-% an Hydroxylgruppen auf.

In den Zweikomponenten-Bindemitteln liegen die Polyisocyanate und Polyhydroxylverbindungen in solchen Mengen vor, die einem NCO/OH-Äquivalentverhältnis von 0,7:1 bis 5:1, vorzugsweise 0,9:1 bis 2:1 und insbesondere 1:1 bis 1,5:1 entsprechen.

Die Zweikomponenten-Polyurethanlacke werden aus organischer Lösung verarbeitet. Geeignete Lösungsmittel sind insbesondere solche, die einerseits zum Lösen des Lacks ausreichend sind und andererseits das zu lackierende Kunststoffinnenteil nicht oder nur ganz schwach anlösen. In Betracht kommen beispielsweise Mischungen aus Lösungsmitteln wie Ethylacetat, Butylacetat, Toluol, Xylol, Methylethylketon, Methylisobutylketon mit flüchtigen Alkoholen wie Isopropanol, Ethanol, n-Butanol und insbesondere Diaceto-

3

nalkohol. Die beispielhaft genannten alkolischen Lösungsmittel werden hierbei lediglich als Lösungsmittelkomponente zum Lösen der Polyhydroxylkomponenten verwendet. Im Falle der Mitverwendung von reaktionsfähigen Alkoholen wie Isopropanol, Ethanol oder n-Butanol muß die gebrauchsfertige Mischung aus Polyisocyanat- und Polyhydroxykomponente unmittelbar nach ihrer Herstellung verarbeitet werden, so daß die flüchtigen Alkohole aus dem Lackfilm verdunsten, bevor die Isocyanat-Additionsreaktion in merklichem Umfang einsetzt. Der reaktionsträgere Diacetonalkohol ermöglicht hierbei einen weitaus größeren Spielraum, da eine merkliche Reaktion zwischen den bevorzugt eingesetzten aliphatischen Polyisocyanaten und diesem reaktionsträgen Alkohol bei Raumtemperatur praktisch nicht stattfindet. Die Mitverwendung dieser alkoholischen Lösungsmittel im Lösungsmittelgemisch dient der Herabsetzung der Aggressivität des Lösungsmittelgemischs gegenüber den Kunststoffmaterialien.

Die Zweikomponenten-Polyurethanlacke können im übrigen die aus der Lacktechnologie üblichen Hilfs- und Zusatzmittel wie Katalysatoren für die NCO/OH-Reaktion, Pigmente, Füllstoffe, Verlaufhilfsmittel u.dgl. enthalten.

Weitere, zur Beschichtung der Kunststoffinnenteile geeignete, chemisch vernetzende Lacke sind beispielsweise solche auf Basis von Amin-vernetzbaren Polyepoxidharzen, solche auf Basis von Melaminharz-vernetzbaren Polyesterharzen oder auch solche auf Basis von in organischen Lösungsmitteln gelösten, physikalisch trocknenden Polyurethanen, denen zur Erhöhung der Vernetzungsdichte Vernetzer wie beispielsweise Lackpolyisocyanate der oben beispielhaft genannten Art zugesetzt worden sind.

Ebenfalls gut geeignet sind unter dem Einfluß von Luftfeuchtigkeit chemisch vernetzende Einkomponenten-Lacke, die als Bindemittel Isocyanatgruppen aufweisende Prepolymere der an sich bekannten Art enthalten. Einzelheiten können auch hier der einschlägigen Literatur entnommen werden (vgl. z.B. "Kunststoff-Handbuch", Band 7, "Polyurethane", Carl Hanser Verlag, München, Wien (1983) Seiten 545 ff.).

Die Beschichtung der tiefgezogenen Kunststoff-Innenteile mit den beispielhaft genannten erfindungsgemäß geeigneten Beschichtungsmitteln kann nach üblichen Methoden der Beschichtungstechnologie erfolgen, vorzugsweise erfolgt der Auftrag des Beschichtungsmittels durch übliches Spritzen.

Eine Vorbehandlung der zu beschichtenden Kunststoff-Innenteile ist im allgemeinen nicht erforderlich. In Ausnahmefällen können jedoch die zu beschichtenden Oberflächen mit milden Lösungsmitteln, beispielsweise Benzin/Alkohol-Gemischen von evtl. anhaftenden Fettspuren gereinigt werden.

Die Hinterschäumung der mit der Lackschicht versehenen Kunststoff-Innenteile erfolgt in an sich bekannter Weise unter Verwendung der bislang hierfür eingesetzten Vorrichtungen. Bezüglich der diesbezüglichen Einzelheiten kann auf die einschlägige Literatur verwiesen werden (vgl. z.B. "Kunststoff-Handbuch", Band 7, "Polyurethane", Carl Hanser Verlag, München, Wien (1983) Seiten 250 ff., insbesondere Seiten 256 ff).

In den nachfolgenden Beispielen beziehen sich alle Prozentangaben, soweit nichts anderes vermerkt, auf das Gewicht.

Beispiele

In den nachfolgenden Beispielen wurden folgende Ausgangsmaterialien verwendet:

Polyol I:

80 %ige Lösung in Butylacetat eines Polyesterpolyols aus Isophthalsäure, Adipinsäure, Hexandiol-1,6 und Trimethylolpropan im Molverhältnis 3:1:4:1, Hydroxylgruppengehalt der Lösung = 3,4 %.

Polyol II:

65 %ige Lösung in Butylacetat/Xylol (Gewichtsverhältnis = 3:1) eines Polyhydroxypolyacrylats aus 33 % Hydroxyethylmethacrylat, 1 % Acrylsäure, 25 % Butylacrylat und 41 % Styrol; Hydroxylgruppengehalt der Lösung: 2,8 %.

Polyisocyanat I:

75 %ige Lösung in Methoxypropylacetat/Xylol (1:1) eines Biuretpolyisocyanats auf Basis von 1,6-Diisocyanatohexan. NCO-Gehalt der Lösung: 16,5 %.

Test zur Überprüfung der Beständigkeit von Kunststoffmaterialien gegenüber organischen Treibmitteln

Der im folgenden angewandte Test (Kondensationstest) wurde entwickelt, um die Einwirkung von organischen Treibmitteln auf Kunststoffmaterialien, wie sie zur Herstellung von Kühlmöbeln verwendet werden, zu untersuchen.

Um den durch Kondensation des Treibmittels hervorgehobenen Effekt zu simulieren, wurde folgende Apparatur verwendet:

Ein ebenes Probestück des Kunststoffmaterials wird zwischen zwei aufeinandergestellte Glastanks gelegt. Der untere Glastank wird bis zu max. 10 % seines Volumens mit dem Treibmittel befüllt, der obere mit Eiswasser.

Aufgrund des hohen Dampfdrucks des Treibmittels bei Raumtemperatur ist die Gasphase in dem unteren Tank mit dem Dampf des Treibmittels gesättigt. Da die Probe des Kunststoffmaterials durch den Boden des über ihr befindlichen Eiswassertanks gekühlt wird, kondensiert der Treibmitteldampf an der Oberfläche der Probe. Die Wirkung des kondensierten Treibmitteldampfs an der Oberfläche wird visuell beurteilt.

## Beispiel 1

Eine ABS Platte im Format 200 x 300 mm wird mit einem pigmentierten Zweikomponentenlack im Spritzauftrag beschichtet und forciert bei 80° C getrocknet.

Die Komponente I des Beschichtungsmittels besteht aus 16,7 Gew.-Teilen Polyol I, 20,0 Gew.-Teilen Polyol II, 0,9 Gew.-Teilen einer 10 %igen Zinkoctoat-Lösung in Toluol, 22,8 Gew.-Teilen Titandioxid-Pigment (Rutil), 4,2 Gew.-Teilen eines handelsüblichen Schwebemittels (10 %ige Lösung in Xylol von ®Bentone der Fa. Kronos Titan GmbH, D-5090 Leverkusen) und 29,1 Gew.-Teilen eines Lösungsmittelgemischs aus Diacetonalkohol und Ethylacetat (Gewichtsverhältnis = 1:1).

Die Komponente II des Beschichtungsmittels besteht aus 21,2 Gew.-Teilen Polyisocyanat I (75 %ige Lösung). Die Zusammensetzung des Beschichtungsmittels entspricht einem NCO/OH-Äquivalentverhältnis (ohne Einbeziehung der praktisch nicht-reaktiven Hydroxylgruppen des Lösungsmittels) von 1,3:1.

Die mit dem Beschichtungsmittel beschichtete und getrocknete Platte wird anschließend dem oben beschriebenen Test unterzogen. Das Testergebnis wird in Tabelle 1 mitgeteilt.

## Beispiel 2

Beispiel 1 wird wiederholt, jedoch unter Verwendung eines Klarlacks, der bezüglich seiner Zusammensetzung dem Lack gemäß Beispiel 1 entspricht, jedoch weder Titandioxid-Pigment noch Schwebemittel enthält. Das Testergebnis wird in Tabelle 1 mitgeteilt.

## Beispiel 3

Beispiel 2 wird wiederholt, jedoch unter Erhöhung der Menge des eingesetzten Polyisocyanats, so daß ein Äquivalentverhältnis von Isocyanatgruppen zu Hydroxylgruppen (ohne Einbeziehung der praktisch nicht-reaktiven Hydroxylgruppen des Lösungsmittels) von 1,5:1 resultiert.

Tabelle 1

| Beispiel | Prüfdauer (Min) | Beurteilung* |
|---|---|---|
| Vergleich (ABS unbeschichtet) | 9 | 3 - 4 |
| 1 | 120 | 1 - 2 |
| 2 | 120 | 1 - 2 |
| 3 | 120 | 1 |

\* 1 = kein Angriff, 2 = leichte Quellung,

3 = Quellung, 4 = starke Blasenbildung,

5 = Auflösung/Risse

**Patentansprüche**

1. Verfahren zur Herstellung von hinterschäumten, tiefgezogenen Kunststoff-Innenteilen für Kühlmöbel durch Hinterschäumung der Innenteile mit einem zu einem Polyurethanhartschaumstoff ausreagierenden, ein organisches Treibmittel enthaltenden Reaktionsgemisch, dadurch gekennzeichnet, daß man
(i) ein Reaktionsgemisch verwendet, welches als Treibmittel, gegebenenfalls neben weiteren Treibmitteln, einen teilhalogenierten Kohlenwasserstoff mit mindestens einer Kohlenstoff-Wasserstoff- Bindung des Siedebereichs von -50 °C bis +50 °C enthält und
(ii) die zu hinterschäumenden Innenteile vor der Hinterschäumung schaumstoffseitig mit einer Lackschicht auf Basis eines lösungsmittelhaltigen, chemisch vernetzenden Ein- oder Zweikomponenten-Lacks oder auf Basis einer wäßrigen Polyurethandispersion versieht.

2. Verfahren gemäß Anspruch 1, dadurch gekennzeichnet, daß man das Innenteil schaumstoffseitig mit einem Zweikomponenten-Polyurethanlack beschichtet.

3. Verfahren gemäß Anspruch 1, dadurch gekennzeichnet, daß man das Innenteil schaumstoffseitig mit einem Beschichtungsmittel auf Basis eines Amin-vernetzbaren Polyepoxidharzes beschichtet.